# EUROPÄISCHE PATENTANMELDUNG

(11) **EP 4 794 051 A1**
(43) Veröffentlichungstag der Anmeldung: **19.08.2026**
(21) Anmeldenummer: 26150973.1
(22) Anmeldetag: 09.01.2026
(51) Int. Cl.: H01M 10/12, H01M 50/541, H01M 50/534, H01M 50/562

(54) **AKKUMULATORZELLE UND BLEIAKKUMULATOR**

(30) Priorität: 14.02.2025 DE 202025100757 U
(71) Anmelder: Hoppecke Batterien GmbH & Co. KG, 59929 Brilon-Hoppecke (DE)
(72) Erfinder: CATTANEO, Eduardo, 59929 Brilon (DE); KESPER, Heinrich, 34508 Willingen (DE); RIEGEL, Bernhard, 59929 Brilon (DE)
(74) Vertreter: Brinkmann & Partner

(57) **Zusammenfassung**

Die Erfindung betrifft eine Akkumulatorzelle für einen Bleiakkumulator, mit einem Zellengehäuse (2) und einem das Zellengehäuse (2) fluiddicht verschließenden Zellendeckel (3), wobei innerhalb des Zellengehäuses (2) einander abwechselnd positive und negative Elektrodenplatten (5, 4) sowie ein die Elektrodenplatten (5, 4) umgebender Elektrolyt angeordnet sind, wobei die positiven und die negativen Elektrodenplatten (5, 4) jeweils an wenigstens einen gemeinsamen Pol (10, **11;** 8, 9) mittels jeweiliger Polbrücke (7, 6) elektrisch angeschlossen sind und wobei der positive Pol (10, **11),** der über die zugehörige Polbrücke (7) mit den positiven Elektrodenplatten (5) verbunden ist, aus einer Bleilegierung in Form von Hartblei gebildet ist, dadurch gekennzeichnet, dass die Polbrücke (7), die die positiven Elektrodenplatten (5) mit dem positiven Pol (10, **11)** verbindet, aus Reinblei gebildet ist, und dadurch, dass eine Rückhalteeinrichtung vorgesehen ist, die dazu eingerichtet ist, vom positiven Pol (10, **11)** abgeplatzte Partikel aufzufangen und so einen Kontakt der Partikel mit den Elektrodenplatten (5, 4) zu verhindern.

## Beschreibung

Die Erfindung betrifft eine Akkumulatorzelle für einen Bleiakkumulator, mit einem Zellengehäuse und einem das Zellengehäuse fluiddicht verschließenden Zellendeckel, wobei innerhalb des Zellengehäuses einander abwechselnd positive und negative Elektrodenplatten sowie ein die Elektrodenplatten umgebender Elektrolyt angeordnet sind, wobei die positiven und die negativen Elektrodenplatten jeweils an wenigstens einen gemeinsamen Pol mittels jeweiliger Polbrücke elektrisch angeschlossen sind und wobei der positive Pol, der über die zugehörige Polbrücke mit den positiven Elektrodenplatten verbunden ist, aus einer Bleilegierung in Form von Hartblei gebildet ist. Ferner betrifft die Erfindung einen Bleiakkumulator, der aus einer Mehrzahl von Akkumulatorzellen gebildet ist.

Akkumulatorzellen für Bleiakkumulatoren bestehen im Allgemeinen aus positiven und negativen Elektrodenplatten sowie einem Elektrolyten. Die aktive Masse, d.h. das an der chemischen Reaktion beteiligte Material, ist im Falle der positiven Elektrode Bleidioxid (PbO₂) und im Falle der negativen Elektrode Blei (Pb). Bei dem Elektrolyten handelt es sich um verdünnte Schwefelsäure (H₂SO₄). Ein Bleiakkumulator besteht aus einer Mehrzahl elektrisch verbundener vorgenannter Akkumulatorzellen.

Beim Entladen des Bleiakkumulators reagieren Blei, Bleidioxid und Schwefelsäure zu Bleisulfat (PbSO₄) und Wasser (H₂O). Bei der Ladung werden die Prozesse umgekehrt, d.h. Bleisulfat und Wasser wieder zu Blei, Bleidioxid und Schwefelsäure umgesetzt. Der Elektrolyt ist dabei, im Unterschied zu anderen Akkumulator-Typen, an der Reaktion beteiligt. In einer ungewünschten Nebenreaktion wird Wasser (H₂O) zu Sauerstoff (O₂) und Wasserstoff (H₂) zersetzt.

In der Regel sind die Bleiakkumulatoren aus einer Mehrzahl von positiven und negativen Elektrodenplatten aufgebaut. Die Elektrodenplatten gleicher Polung sind über Polstege bzw. Polbrücken miteinander verbunden.

Zwischen den Elektrodenplatten sind im Allgemeinen Separatoren vorgesehen, die ein Berühren der unterschiedlich gepolten Platten und somit einen Kurzschluss verhindern. Gleichzeitig müssen die Separatoren aber lonenwanderungen der an der Reaktion beteiligten Ionen zulassen. Sie müssen also einerseits elektrisch isolierend und anderseits ionendurchlässig sein. Zudem sollten sie säure- und oxidationsbeständig sein. Geeignete Materialien sind im Falle von Bleiakkumulatoren z.B. Polyethylen (PE), Polyvinylchlorid (PVC) oder Phenolharze.

Aus der DE 30 36 752 T5 ist ein Bleiakkumulator bekannt, der sich unter anderem dadurch auszeichnet, dass sämtliche stromleitenden Elemente zumindest einer Elektrodengruppe eine zumindest 1% antimonenthaltende Antimon-Blei-Legierung enthalten. "Stromleitende Elemente" in diesem Sinne sind dabei nicht nur die Anschlusskontakte des Akkumulators, mithin dessen Pole, sondern auch die nach der DE 30 36 752 T5 sogenannten Gruppenschienen, mithin die Polbrücken, unter deren Zwischenordnung die Elektrodenplatten des Bleiakkumulators an die entsprechenden Pole elektrisch angeschlossen sind.

Auch die JPS 63-88752 A offenbart eine Batterie mit einem Pol aus einer blei-antimonbasierten Legierung. Im Unterschied zur DE 30 36 752 T5 offenbart die JPS 63-88752 A aber eine den Pol mit den zugehörigen Elektrodenplatten elektrisch verbindende Polbrücke aus einer zinnbasierten Legierung.

Die Bauteile der Bleiakkumulatoren sind in der Regel in Kunststoffgehäusen untergebracht, die aus einem Gehäuse und einem Deckel bestehen. Die Pole müssen dabei aus dem Deckel hinausgeführt werden. Dies wird auch als Poldurchführung bezeichnet. Die Poldurchführung muss möglichst elektrolytdicht sein.

Je nach Aufbau der positiven und negativen Elektrodenplatten werden unterschiedliche Bleiakkumulatoren-Bauarten unterschieden.

Bei der Bauart GroE (Akronym für Großoberflächenplatten Engeinbau) gemäß DIN 40 738 besteht die positive Elektrodenplatte aus einer Reinblei-Platte mit einer lamellenförmigen Oberflächenstruktur. Die positive aktive Masse PbO₂ wird dann auf den Platten durch den so genannten Formationsprozess gebildet. Die negativen Elektrodenplatten sind gegossene Gitter aus Blei oder einer Bleilegierung.

Als weitere Bauarten gibt es z.B. noch die OPzS Zellen (Ortsfeste Panzerplatte Sonderseparation) und die OCSM Zellen (Ortsfeste-Kupfer(Cu)-Streck-Metall), bei denen die positiven Platten Röhrchenplatten sind, deren Seelengitter aus einer Blei-Antimon-Legierung gegossen sind. Bleibeschichtete Ortsfeste Kupferstreckmetallgitter (OCSM) werden auch für industrielle Negativplattengitter verwendet.

Die Bauarten GroE und OPzS mit Standard Fallgussgittern oder mit Druckguss-Gittern sind in der Regel als geschlossene Batterien realisiert. In geschlossenen Batterien ist der Elektrolyt in flüssiger Form frei beweglich, d.h. nicht festgelegt und, wie bereits erwähnt, durch die Wasserzersetzungsreaktion entstehen an den Elektroden Sauerstoff- bzw. Wasserstoffgas. Das entstehende Gas muss prinzipiell über Stopfen aus dem BatterieGehäuse hinausgeleitet werden. Da es durch die Zersetzung zudem zu einem Wasserverlust kommt, muss gelegentlich Wasser nachgefüllt werden.

Im Gegensatz zu geschlossenen Batterien gibt es auch verschlossene Batterien, bei denen der Elektrolyt als Gel oder in einem Vlies festgelegt ist und der gebildete Sauerstoff nicht entweicht, sondern zur negativen Platte diffundieren kann und dort zu Wasser und Bleisulfat reagiert. Die Bildung von Wasserstoff wird dadurch unterdrückt. Ein Beispiel für eine verschlossene Bauart ist die OPzV Zelle (Ortsfeste Panzerplatte Verschlossen).

Vorteile der GroE-Akkus sind der hohe Korrosionswiderstand und eine lange Lebensdauer. Sie eignen sich insbesondere für Hochstromentladungen von kurzer Dauer und somit für die Notstromversorgung von z.B. Kraftwerken. GroE-Akkus sichern also im Störfall z.B. die Leittechnik eines Kraftwerks ab und versorgen Kühlsysteme über Notstromkreise.

Wenngleich sich Bleiakkumulatoren, insbesondere GroE-Akkumulatoren, in der Praxis bewährt haben, besteht weiterhin Verbesserungsbedarf.

So neigen Bleiakkumulatoren nach einer bestimmten Betriebsdauer zu Kurzschlüssen, die dadurch entstehen können, dass sich vom Batteriepol der positiven Platte leitfähige Korrosionspartikel lösen und innerhalb des Batteriegehäuses platzierte, benachbarte positive und negative Elektrodenplatten gleichsam kontaktieren und damit kurzschließen.

Das grundsätzliche Problem besteht darin, dass aus Blei gefertigte positive Elektrodenplatten einem Alterungsprozess unterliegen. Auch im bestimmungsgemäßen Verwendungsfall kommt es zu Korrosionseffekten, infolge dessen sich Bleidioxid bildet. Bleidioxid ist im Unterschied zum Substrat aus Blei voluminöser, so dass es im Laufe der Zeit infolge von Korrosionserscheinungen, d.h. Bleidioxidbildung, zu Ausdehnungsprozessen kommt. Infolge dessen wirken Schärkräfte, die dazu führen, dass die aus Hartblei gebildete Polbrücke abblättert bzw. abschiefert. Damit ist gemeint, dass Bleipartikel regelrecht vom Pol oder der Polbrücke abplatzen und alsdann der Schwerkraft folgend nach unten in das Batteriegehäuse fallen können.

Dieser Effekt wirkt sich insbesondere bei GroE-Akkumulatoren negativ aus, denn diese sind darauf ausgelegt, eine lange Betriebsdauer von 20 Jahren und mehr zu haben. Insofern wirken sich die negativen Eigenschaften von Korrosionseffekten insbesondere mit Bezug auf die bei GroE- Akkumulatoren geforderte Langlebigkeit aus.

Aus Gründen des verringerten Innenwiderstandes ist es im Stand der Technik bevorzugt, Reinblei einzusetzen, um so eine hohe Stromleitfähigkeit und einen Korrosionswiderstand zu erzeugen. Dabei sind bevorzugterweise sowohl die positive Elektrodenplatte, als auch die die Elektrodenplatten elektrisch miteinander kontaktierende Brücken aus Reinblei gebildet.

Der Erfindung liegt damit die **Aufgabe** zu Grunde, eine Akkumulatorzelle für einen Bleiakkumulator und einen Bleiakkumulator mit solchen Akkumulatorzellen bereitzustellen, bei denen die bekannten Korrosionseffekte und/oder deren Auswirkungen auf das galvanische System der Akkumulatorzelle verhindert wird.

Zur **Lösung** dieser Aufgabe wird mit der Erfindung vorgeschlagen eine Akkumulatorzelle der eingangs genannten Art, die sich dadurch auszeichnet, dass die Polbrücke, die die positiven Elektrodenplatten mit dem positiven Pol verbindet, aus Reinblei gebildet ist und dass eine Rückhalteinrichtung vorgesehen ist, die dazu eingerichtet ist, vom positiven Pol abgeplatzte Partikel aufzufangen und so einen Kontakt der Partikel mit den Elektrodenplatten zu verhindern.

Mit dem aus Hartblei gebildeten Pol wird in vorteilhafter Weise ein Pol bereitgestellt, der gegenüber Alterungserscheinungen wesentlich widerstandsfähiger ist als bisher eingesetzte Pole aus Reinblei.

Der Pol einer positiven Platte ist mithin nicht aus Reinblei, sondern aus einer Bleilegierung gebildet, um ein Abblättern oder Abschiefern infolge von Korrosion zu minimieren. Dabei erfolgt erfindungsgemäß eine Materialtrennung zwischen Reinblei und Bleilegierung im Übergang zwischen Brücke und Pol. Die Brücke ist aus Reinblei gebildet, der Pol hingegen nicht , sondern stattdessen aus einer Bleilegierung.

Es hat sich dabei herausgestellt, dass Hartblei über eine ausreichende Leitfähigkeit verfügt, so dass ein Unterschied hinsichtlich der Kenndaten der Akkumulatorzelle im Praxisbetrieb sofern vorhanden, jedenfalls vernachlässigbar klein ist. Es kann mithin erstmals eine Akkumulatorzelle einerseits und ein Bleiakkumulator andererseits bereitgestellt werden, dessen Pole auch über einen vergleichsweise langen Zeitraum hinweg korrosionsbeständig sind. Der aus dem Stand der Technik bekannte Nachteil, bei dem nach einer bestimmten Zeit Kurzschlüsse zwischen positiven und negativen Elektrodenplatten aufgrund von abgeschiefertem Polmaterial quasi nicht mehr verhindert werden können, werden mithin vermieden bzw. zumindest hinausgezögert.

Insbesondere mit Bezug auf GroE-Akkumulatoren bewirkt dies durch eine weitgehende Reduzierung der Kurzschlussneigung eine signifikante Steigerung der Lebensdauer. Während aus dem Stand der Technik bekannte GroE-Akkumulatoren regelmäßig ihre geplante lange Standzeit von 20 Jahren und mehr aufgrund der vorbeschriebenen Nachteile nicht erreichen können, trifft dies auf erfindungsgemäße GroE-Akkumulatoren mit erfindungsgemäßen Akkumulatorzellen nicht mehr zu. Stattdessen können erfindungsgemäß ausgebildete Akkumulatoren sehr viel langlebiger Verwendungen finden.

Erfindungsgemäß wird eine Polbrücke bereitgestellt, die gegenüber Alterungserscheinungen wesentlich widerstandsfähiger ist als die bisher eingesetzte Polbrücke. Polbrücken aus dem Stand der Technik wurden unter anderem aus einer Bleiantimon Legierung gefertigt. Es hat sich nun herausgestellt, dass die Verwendung von Reinblei für die Polbrücke einerseits und von Hartblei für den Pol andererseits einen nicht erwartbaren synergetischen Effekt hinsichtlich der Verbesserung von Korrosionserscheinungen insgesamt erbringt.. Es wird eine hohe elektrische Leitfähigkeit im Verbindungsweg zwischen Elektrodenplatten und Pol sichergestellt. Es hat sich überdies herausgestellt, dass sich die negativen Korrosionseffekte mit Bezug auf Reinblei nahezu ausschließlich auf den Pol beschränken, die Polbrücke hiervon jedoch nicht betroffen ist.

Der positive Pol ist aus Hartblei gebildet. Bei Hartblei handelt es sich um eine Blei-Antimon-Legierung mit vergleichsweise geringem Antimonanteil. Vorzugsweise besteht Hartblei aus den folgenden Komponenten:

| | |
|---|---|
| - 1 Gew.-% bis 13 Gew.-% | Antimon; |
| - Rest | Blei. |

Es hat sich herausgestellt, dass die geforderte mechanische Festigkeit und Korrosionsbeständigkeit erreicht wird, wenn das Hartblei aus folgenden Komponenten besteht:

| | |
|---|---|
| - 4 Gew.-% bis 5 Gew.-% | Antimon; |
| - Rest | Blei. |

Der Ausdruck "Rest Blei" umfasst im Sinne der Erfindung nicht nur Blei als Hauptlegierungskomponente, sondern kann auch die Legierungskomponenten, wie As, Se, Sn und Cu und Verunreinigungen umfassen, die im Fall von Verunreinigungen insbesondere aufgrund der jeweiligen Darstellungsmethode von Antimon und/oder Blei entweder technisch gesehen überhaupt nicht, oder nicht auf wirtschaftlich sinnvolle Weise aus der Legierung und/oder den Einzelkomponenten entfernt werden können.

Zu diesen Spuren, welche jeweils einzeln oder in beliebiger Weise kumuliert in der Hartblei-Legierung enthalten sein können, gehören

| | |
|---|---|
| - Max 0,04 Gew.-% | Bismut, |
| - Max 0,01 Gew.-% | Silber, |
| - Max 0,001 Gew.-% | Cadmium, |
| - Max 0,001 Gew.-% | Eisen, |
| - Max 0,001 Gew.-% | Zink, |
| - Max 0,001 Gew.-% | Tellur und/oder |
| - Max 0,001 Gew.-% | Nickel |

Es ist dabei bevorzugt, dass der Gewichtsanteil der Spuren an weiteren Metallen zusammengenommen einen Betrag von 0,4 Gew.-% nicht übersteigt.

Gemäß einem bevorzugten Merkmal der Erfindung ist vorgesehen, dass die Polbrücke, welche die positiven Platten mit dem positiven Pol verbindet, und der positive Pol stoffschlüssig miteinander verbunden sind. Die Verbindung wird durch eine metallische Verbindung erreicht. Vorzugsweise bilden das Material der Polbrücke einerseits und das Material des Pols andererseits im Grenzbereich dabei eine intermetallische Phase. Vorzugsweise wird die Verbindung mittels Schweißen ausgebildet.

Die aus dem Stand der Technik bekannten Nachteile betreffen aufgrund ihrer langen Standzeiten insbesondere Akkumulatorzellen für GroE-Akkumulatoren und damit GroE-Akkumulatoren an sich. Im Besonderen ist daher eine GroE-Akkumulatorzelle beansprucht. Diese zeichnet sich insbesondere über eine bestimmte Größe und Fläche ihrer Elektrodenplatten aus. Dies deshalb, da diese Art von Akkumulatoren über einen langen Zeitraum hinweg eine konstant hohe Leistung abrufen können müssen, um die technischen Anforderungen für deren Einsatzzweck zu erfüllen. Es ist in diesem Zusammenhang bevorzugt, dass die positiven und die negativen Elektrodenplatten jeweils eine Höhe von 200 mm bis 500 mm, insbesondere 220 mm bis 420 mm, vorzugsweise 229 mm bis 400 mm, weiter bevorzugt 229 mm oder 400 mm, aufweisen. Zum anderen ist es bevorzugt, dass die positiven und die negativen Elektrodenplatten jeweils eine Breite von 120 mm bis 300 mm, insbesondere 130 mm bis 270 mm, vorzugsweise 139 mm bis 268 mm, weiter bevorzugt 136 mm oder 268 mm, aufweisen. Hierbei sind insbesondere zwei Bautypen mit unterschiedlichen elektrischen Leistungswerten zu unterscheiden. Zum einen eine GroE-Akkumulatorzelle mit Elektrodenplatten aufweisend eine Höhe von 229 mm und einer Breite von 136 mm einerseits und zum anderen eine GroE-Akkumulatorzelle mit Elektrodenplatten aufweisend eine Höhe von 400 mm und einer Breite von 268 mm. Alle vorstehenden Maßangaben verstehen sich inklusive möglicher Toleranzen im Bereich zwischen ±0,5 mm und ±2 mm.

Zusätzlich zur Wahl des Polbrücken- und Polmaterials werden die Effekte des Alterungsprozesses des Polbrücken- und Polmaterials erfindungsgemäß dadurch vermindert oder verhindert, dass eine Rückhalteeinrichtung vorgesehen ist, die die abplatzenden Partikel rein mechanisch abfangen und damit zurückhalten kann. Im einfachsten Fall kommen Netze oder Gitter zum Einsatz, deren Maschen- bzw. Gitterweite so gewählt ist, dass der Größe nach kurzschlussverursachende Partikel zurückgehalten werden. Kleinere Partikel, die nicht groß genug sind, um zwei benachbarte Elektroden miteinander kurzschließen zu können, fallen hingegen durch und können so zwischen zwei Platten hindurch bis zum Behälterboden durchfallen.

Hinsichtlich der Netz- bzw. Gitterausgestaltungen zur Rückhaltung sind zwei Ausführungsformen denkbar, die auch miteinander kombiniert werden können. Als erste Ausführungsform können Netzschläuche zum Einsatz kommen, die über den jeweiligen Pol gestülpt sind. Als zweite Ausführungsform kommen plattenförmige Netze oder Gitter zum Einsatz, die unterhalb der jeweiligen Polbrücken und somit oberhalb der Elektrodenplatten den Gehäusequerschnitt vollständig bedecken. Dabei ist es in diesem Zusammenhang bevorzugt, bei der zweiten Ausführungsform nicht eine Netzeinrichtung, sondern eine eigenstabile Gitterkonstruktion zu wählen.

Hintergrund der erfindungsgemäßen Rückhalteeinrichtung ist, dass sich gezeigt hat, dass durch die Verwendung von optimiertem Hartblei ein Abschiefern oder Abblättern des Pols infolge auftretender Korrosionen nicht vollständig ausschließen kann.

Es ist daher erfindungsgemäß wenigstens eine Rückhalteeinrichtung vorgesehen, die dazu eingerichtet ist, vom positiven Pol abgeplatzte Partikel aufzufangen und so einen kurzschlussverursachenden Kontakt mit den Elektrodenplatten zu verhindern.

Gemäß einem bevorzugten Merkmal der Erfindung ist vorgesehen, dass die Rückhalteeinrichtung durch ein Netz und/oder ein Gitter gebildet ist. Vorzugsweise sind Netz und/oder Gitter aus einem elektrisch isolierenden Material gebildet. Weiter bevorzugt sind Netz und/oder Gitter aus einem gegenüber Schwefelsäure beständigen Material gebildet.

Es ist dabei bevorzugt, dass die Maschenweite des Netzes und/oder des Gitters so ausgebildet ist, dass eine Rückhaltung von kurzschlussverursachenden Partikeln ab einer bestimmten Größe erfolgt, während nicht kurzschlussverursachende Partikel die Rückhalteeinrichtung ungehindert passieren können. Es erfolgt damit eine Rückhaltung von Partikeln nach dem Größenausschlussprinzip. Dieser Maßnahme liegt die Erkenntnis zu Grunde, dass vom Pol oder Polbrücke abgeschieferte Partikel erst ab einer gewissen Größe in der Lage sind, einen Kurzschluss zu erzeugen. Dies nämlich dann, wenn sie aufgrund ihrer Größe wenigstens den Abstand zwischen zwei benachbarten positiven und negativen Elektrodenplatten zu überbrücken vermögen. Partikel, die demgegenüber kleiner sind, können Kurzschlüsse von vornherein nicht verursachen.

Gemäß einer ersten bevorzugten Ausführungsform ist vorgesehen, dass die Rückhalteeinrichtung in Form eines den positiven Pol umgebenden Netzschlauchs gebildet ist.

Gemäß einer weiteren bevorzugten Ausführungsform ist vorgesehen, dass die Rückhalteeinrichtung in Form eines flächigen Netzes und/oder Gitters gebildet ist, welche in Höhenrichtung zwischen dem positiven Pol, insbesondere den zugehörigen Polbrücke, einerseits und den Elektrodenplatten andererseits angeordnet, insbesondere aufgespannt, ist. Vorzugsweise ist sie zu diesem Zweck an Befestigungseinrichtungen befestigt, die vom Zellengehäuse bereitgestellt werden. Die Befestigungseinrichtungen können insbesondere durch Haken gebildet sein, die mit korrespondieren am Netz oder dem Gitter ausgebildeten Hakenaufnahmen zusammenwirken, insbesondere in diese eingreifen.

Es ist dabei bevorzugt vorgesehen, dass sich das Netz und/oder das Gitter mit seiner jeweiligen flächigen Seite im Wesentlichen über die gesamte Querschnittsfläche des Zellengehäuses erstreckt. Hierdurch ist sichergestellt, dass vom Pol abplatzende Partikel nicht an der Rückhalteeinrichtung vorbei in den Plattenraum fallen. Dies kann etwa bei einer Lageänderung der Akkumulatorzelle in Folge eines Transports oder einer Wartung geschehen.

Die aus dem Stand der Technik bekannten Nachteile betreffen aufgrund ihrer langen Standzeiten insbesondere Akkumulatorzellen für GroE-Akkumulatoren und damit GroE-Akkumulatoren an sich. Im Besonderen ist daher eine GroE-Akkumulatorzelle beansprucht. Diese zeichnet sich wie bereits beschrieben durch eine bestimmte Größe und Fläche ihrer Elektrodenplatten aus. Ferner ist sie durch vergleichsweise lange Standzeiten von mehr als 20Jahren charakterisiert. Aufgrund dessen hat es sich bei GroE-Akkumulatorzellen als vorteilhaft erwiesen, wenn die Rückhalteeinrichtung als eigenstabiles Gitter gebildet ist. Hierdurch ist sichergestellt, dass die Rückhalteeinrichtung ihre Funktion über die gesamte Standzeit hinweg erfüllen kann.

Neben der erfindungsgemäße Akkumulatorzelle betrifft die Erfindung überdies einen Bleiakkumulator, welcher aus einer Mehrzahl von erfindungsgemäßen Akkumulatorzellen gebildet ist.

Wenngleich auch einzelne Akkumulatorzellen hinsichtlich ihrer Leistung und ihrer elektrischen Kennzahlen für manche Einsatzzwecke ausreichend sein mögen, ist dies überwiegend nicht der Fall. Stattdessen können, um die für den jeweiligen Einsatzzweck passenden Leistungen und Kennzahlen in einfacher Weise dadurch skaliert werden, dass eine Mehrzahl von Akkumulatorzellen zu einem größeren Bleiakkumulator zusammengeschlossen werden. Der Zusammenschluss erfolgt dabei über die jeweiligen Pole der jeweiligen Akkumulatorzellen. Vorzugsweise kommen hierfür Polverbinder zum Einsatz, welche vorzugsweise in Form von Kabeln mit entsprechenden Polanschlüssen gebildet sind.

Um die Kurzschlussneigung zu verringern, werden also zwei synergetisch wirkende Maßnahmen vorgeschlagen, die in Kombination miteinander zum Tragen kommen. Zum einen den Wechsel des Polmaterials von Reinblei zu der wesentlich korrosionsbeständigeren Hartblei-Legierung und zum anderen die Anordnung einer Rückhalteeinrichtung, welche abplatzende Polpartikel nach dem Größenausschlussprinzip separiert und zurückhält.

Die Erfindung wird nachfolgend anhand eines Ausführungsbeispiels erläutert. Dabei zeigen
- Fig. 1: in schematisch perspektivischer Darstellung eine erfindungsgemäße Akkumulatorzelle;
- Fig. 2: eine Innenansicht der Akkumulatorzelle in schematisch perspektivischer Darstellung.

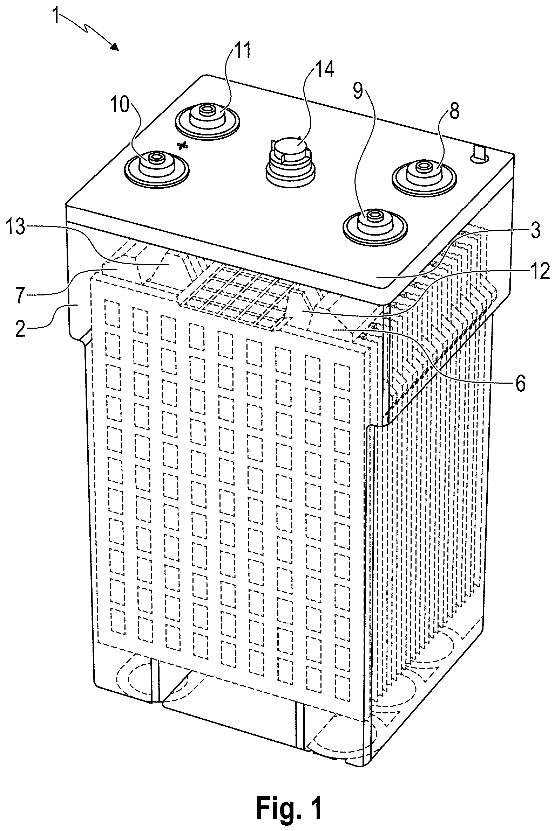

Fig. 1 lässt in schematisch perspektivischer Ansicht eine GroE-Akkumulatorzelle 1 nach der Erfindung erkennen.

Die Akkumulatorzelle 1 verfügt über ein Zellengehäuse 2 und einen Zellendeckel 3, der das Zellengehäuse 2 im endmontierten Zustand fluiddicht verschließt.

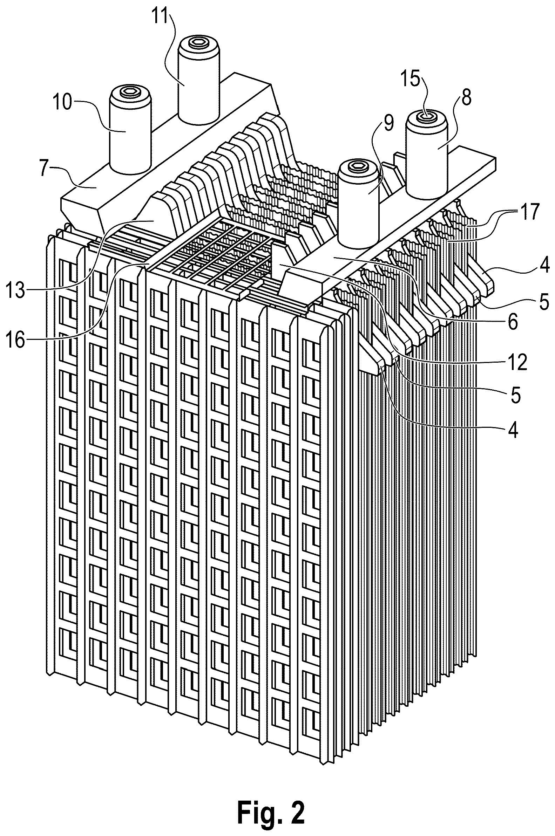

Innerhalb des Zellengehäuses 2 sind einander abwechselnd negative und positive Elektrodenplatten 4 und 5 angeordnet, und zwar unter jeweiliger Zwischenordnung eines Separators 17, wie sich dies insbesondere aus der Darstellung nach Fig. 2 ergibt. Innerhalb des Zellengehäuses 2 ist des Weiteren ein in den Figuren nicht näher dargestellter Elektrolyt angeordnet, der im endmontierten Zustand der Akkumulatorzelle 1 die Elektrodenplatten 4 und 5 umgibt.

Die Elektrodenplatten 4, 5 weisen vorliegend eine Höhe von 400 mm und einer Breite von 268 mm auf. Alle vorstehenden Maßangaben verstehen sich inklusive möglicher Toleranzen im Bereich zwischen ±0,5 mm und ±2 mm.

Wie Fig. 2 darüber hinaus erkennen lässt, sind die negativen Elektrodenplatten 4 einerseits sowie die positiven Elektrodenplatten 5 andererseits jeweils miteinander elektrisch kontaktiert, zu welchem Zweck Polbrücken vorgesehen sind, und zwar bezüglich der negativen Elektrodenplatten 4 die Polbrücke 6 und bezüglich der positiven Elektrodenplatten 5 die Polbrücke 7.

Mittels der jeweiligen Polbrücken 6 bzw. 7 sind die negativen Elektrodenplatten 4 einerseits und die positiven Elektrodenplatten 5 andererseits jeweils an durch Öffnungen des Zellendeckels 3 hindurchgeführte Pole 8, 9, 10 und 11 elektrisch angeschlossen. Es sind mithin insgesamt vier Pole vorgesehen, wobei die negativen und die positiven Elektrodenplatten 4 und 5 jeweils an zwei Pole angeschlossen sind, nämlich die negativen Elektrodenplatten 4 an die Pole 8 und 9 und die positiven Elektrodenplatten an die Pole 10 und 11. Auch dieser Sachzusammenhang ergibt sich insbesondere aus der Darstellung nach Fig. 2.

Die Polbrücken 6, 7 sind ihrerseits elektrisch mit den jeweiligen positiven und negativen Elektrodenplatten über Stromabnehmer 12, 13, auch Plattenfahnen genannt, verbunden und zwar bezüglich der negativen Elektrodenplatten 4 der Stromabnehmer 12 und bezüglich der positiven Elektrodenplatten 5 der Stromabnehmer 13.

Die Erfindung umfasst auch eine solche Ausgestaltung, in der maximal acht Pole vorgesehen sind, wobei die negativen und die positiven Elektrodenplatten 4 und 5 über die zugehörigen Polbrücken 6, 7 jeweils an vier positive Pole einerseits und vier negative Pole andererseits angeschlossen sind.

Da im bestimmungsgemäßen Betrieb der Akkumulatorzelle 1 das Wasser im Elektrolyten reduziert wird, ist eine Wassernachfüllung von Zeit zu Zeit erforderlich. Der Zellendeckel 3 verfügt zu diesem Zweck über eine Nachfüllöffnung 14, welche mit einem Einsatz verschlossen ist, allerdings nicht fluid- und/oder gasdicht, damit unerwünschte Überdruckausbildungen im Zellengehäuse 2 insbesondere während eines Wiederaufladevorgangs vermieden sind.

Vorliegend verfügen die Pole 8, 9, 10 und 11 jeweils über eine Einlage 15 aus Kupfer und/oder einer Kupferlegierung. Hierdurch wird in vorteilhafter Weise ein gegenüber einer Polausführung ohne Einlage verminderter Innenwiderstand erreicht.

Die elektrische Verbindung zwischen den Elektrodenplattenpaaren und den jeweils zugehörigen Polen 8, 9, 10 und 11 ist bevorzugterweise aus einem hochleitfähigen Werkstoff gebildet oder weist zumindest Bereiche mit Einlagen aus einem hochleitfähigen Werkstoff auf. Auch hierdurch ist eine Minimierung des Innenwiderstands erreicht.

Im vorliegenden Fall sind die Polbrücken aus Reinblei gebildet. Die positiven Pole 10, 11 sind demgegenüber aus Hartblei in der Zusammensetzung 4,0 Gew.-% bis 4,5 Gew.-% Antimon und einem Rest Blei gebildet. Die Formulierung "Rest Blei" kann dabei auch Spuren anderer Metalle enthalten, deren Gewichtsanteil zusammengenommen jedoch 0,4 Gew.-% nicht übersteigen.

Die erfindungsgemäß bereitgestellten Polbrücken 6, 7sind hierdurch gegenüber Alterungserscheinungen wesentlich widerstandsfähiger, als das bisher eingesetzteHartblei. Infolgedessen kann ein Abblättern oder Abschiefern durch von Korrosion minimiert werden. Dabei folgt eine Materialtrennung zwischen Reinblei und Bleilegierung im Übergang zwischen Polbrücke 7 und dem jeweiligen Pol 10, 11 aus Hartblei (Pb-Sb) . Der aus dem Stand der Technik bekannte Nachteil, bei dem nach einer bestimmten Zeit Kurzschlüsse zwischen positiven und negativen Elektrodenplatten 4, 5 aufgrund von abgeschiefertem Pol- und Polbrücken material nahezu zwangsläufig erfolgen, werden mithin vermieden bzw. zumindest hinausgezögert. Für die vorliegende GroE-Akkumulatorzelle 1 bewirkt dies durch eine weitgehende Reduzierung der Kurzschlussneigung eine signifikante Steigerung der Lebensdauer.

Neben der erfindungsgemäßen Wahl des Polmaterial weist die Akkumulatorzelle 1 eine Rückhalteeinrichtung in Form eines eigenstabilen Gitters 16 auf. In Fig. 2 ist das Gitter 16 lediglich im vorderen Abschnitt dargestellt, um einen freien Blick auf die Elektrodenplatten 4, 5 zu gewähren. Tatsächlich erstreckt sich das Gitter 16 jedoch über die gesamte Länge des Zellengehäuses 2. Ferner ist zu erkennen, dass das Gitter 16 oberhalb der Elektrodenplatten 4, 5 und unterhalb der Pole 10, 11 sowie unterhalb der Polbrücken 6, 7 angeordnet ist. Das Gitter 16 erstreckt sich in Breitenrichtung dabei beidseits bis unter die jeweilige Polbrücke 6, 7. Das Gitter 16 ist in Höhenrichtung folglich zwischen den Polbrücken 6, 7 einerseits und den Elektrodenplatten 4, 5 angeordnet.

Das erfindungsgemäße Gitter 16 dient dem Zweck, die von den Polen 10, 11 - zwar durch die erfindungsgemäße Materialwahl in stark vermindertem, aber möglicherweise nicht vernachlässigbarem Maße - abplatzenden Partikel rein mechanisch abzufangen und damit zurückzuhalten. Vorliegend ist die Gitterweite des Gitters 16 so gewählt ist, dass der Größe nach kurzschlussverursachende abgeplatzte Partikel zurückgehalten werden. Kleinere Partikel, die nicht groß genug sind, um zwei benachbarte Elektrodenplatten 4, 5 miteinander kurzschließen zu können, fallen hingegen durch die Maschen des Gitters 13 und können so zwischen zwei Elektrodenplatten 4, 5 hindurch bis zum Behälterboden des Zellengehäuses 2 durchfallen.

Das Gitter 16 ist des Weiteren zwingend aus einem elektrisch isolierenden Material, insbesondere aus einem Kunststoff gebildet. Das Material des Gitters 16 ist dabei ferner gegenüber dem aus verdünnter Schwefelsäure gebildeten Elektrolyten beständig.

Die aus dem Stand der Technik bekannten Nachteile betreffen aufgrund ihrer langen Standzeiten insbesondere die vorliegende GroE-Akkumulatorzelle und daraus gebildete GroE-Akkumulatoren. Zwar können als Rückhalteeinrichtung prinzipiell auch Netze eingesetzt werden. Aufgrund der vorliegenden Ausgestaltung der Rückhalteeinrichtung als eigenstabiles Gitter 16, ist jedoch sichergestellt, dass die Rückhalteeinrichtung ihre Funktion über die gesamte Standzeit hinweg erfüllen kann. Die vorliegende Rückhalteeinrichtung ist damit wartungsfrei ausgebildet. Sofern entsprechende Wartungsintervalle vorgesehen werden, können auch bei GroE-Akkumulatorzellen 1 jedoch auch Rückhalteeinrichtungen in Form von Netzen eingesetzt werden.

Eine Vielzahl von GroE-Akkumulatorzellen 1 gemäß Fig. 1 können zur Ausbildung eines GroE-Akkumulators miteinander in Reihen kombiniert und elektrisch miteinander verbunden werden. Die so miteinander kombinierten Akkumulatorzellen 1 sind innerhalb eines übergeordneten Akkumulatorgehäuses angeordnet. Dabei erfolgt die Anordnung der Akkumulatorzellen 1 derart, dass die Akkumulatorzellen 1 reihenweise unter Belassung eines Spaltraums beabstandet zueinander angeordnet sind. Es ist so die Möglichkeit geschaffen, dass zwischen den Akkumulatorzellen 1 ein Kühlstrom hindurchgeführt werden kann, was im bestimmungsgemäßen Betriebsfall zu einer Abkühlung der Akkumulatorzellen 1 führt.

### Bezugszeichen

- 1: GroE-Akkumulatorzelle
- 2: Zellengehäuse
- 3: Zellendeckel
- 4: negative Elektrodenplatte
- 5: positive Elektrodenplatte
- 6: Polbrücke
- 7: Polbrücke
- 8: Pol
- 9: Pol
- 10: Pol
- 11: Pol
- 12: Stromabnehmer
- 13: Stromabnehmer
- 14: Nachfüllöffnung
- 15: Einsatzlagen
- 16: Gitter
- 17: Separator

## Patentansprüche

1. Akkumulatorzelle für einen Bleiakkumulator, mit einem Zellengehäuse (2) und einem das Zellengehäuse (2) fluiddicht verschließenden Zellendeckel (3), wobei innerhalb des Zellengehäuses (2) einander abwechselnd positive und negative Elektrodenplatten (5, 4) sowie ein die Elektrodenplatten (5, 4) umgebender Elektrolyt angeordnet sind, wobei die positiven und die negativen Elektrodenplatten (5, 4) jeweils an wenigstens einen gemeinsamen Pol (10, 11; 8, 9) mittels jeweiliger Polbrücke (7, 6) elektrisch angeschlossen sind und wobei der positive Pol (10, 11) , der über die zugehörige Polbrücke (7) mit den positiven Elektrodenplatten (5) verbunden ist, aus einer Bleilegierung in Form von Hartblei gebildet ist, **dadurch gekennzeichnet, dass** die Polbrücke (7), die die positiven Elektrodenplatten (5) mit dem positiven Pol (10, 11) verbindet, aus Reinblei gebildet ist, und dass eine Rückhalteeinrichtung vorgesehen ist, die dazu eingerichtet ist, vom positiven Pol (10, 11) abgeplatzte Partikel aufzufangen und so einen Kontakt der Partikel mit den Elektrodenplatten (5, 4) zu verhindern.

2. Akkumulatorzelle nach Anspruch 1, **dadurch gekennzeichnet, dass** Hartblei gebildet ist aus:
| | |
|---|---|
| - 1 Gew.-% bis 13 Gew.-% | Antimon; |
| - Rest | Blei. |

3. Akkumulatorzelle nach Anspruch 2, **dadurch gekennzeichnet, dass** Hartblei gebildet ist aus:
| | |
|---|---|
| - 4 Gew.-% bis 5 Gew.-% | Antimon; |
| - Rest | Blei. |

4. Akkumulatorzelle nach einem der vorhergehenden Ansprüche, **dadurch gekennzeichnet, dass** die Polbrücke (7) und der positive Pol (10, 11) stoffschlüssig miteinander verbunden sind, wobei die stoffschlüssige Verbindung durch eine intermetallische Phase gebildet ist.

5. Akkumulatorzelle nach einem der vorhergehenden Ansprüche, **dadurch gekennzeichnet, dass** die positiven und die negativen Elektrodenplatten (5, 4) jeweils eine Höhe von 200 mm bis 500 mm, insbesondere 220 mm bis 420 mm, vorzugsweise 229 mm bis 400 mm, weiter bevorzugt 229 mm oder 400 mm, aufweisen.

6. Akkumulatorzelle nach einem der vorhergehenden Ansprüche, **dadurch gekennzeichnet, dass** die positiven und die negativen Elektrodenplatten (5, 4) jeweils eine Breite von 120 mm bis 300 mm, insbesondere 130 mm bis 270 mm, vorzugsweise 139 mm bis 268 mm, weiter bevorzugt 136 mm oder 268 mm, aufweisen.

7. Akkumulatorzelle nach Anspruch 1, **dadurch gekennzeichnet, dass** die Rückhalteeinrichtung durch ein Netz und/oder ein Gitter (16) gebildet ist.

8. Akkumulatorzelle nach Anspruch (7), **dadurch gekennzeichnet, dass** die Maschenweite des Netzes und/oder des Gitters (16) so ausgebildet ist, dass eine Rückhaltung von kurzschlussverursachenden Partikeln ab einer bestimmten Größe erfolgt, während nicht kurzschlussverursachende Partikel die Rückhalteeinrichtung ungehindert passieren können.

9. Akkumulatorzelle nach Anspruch 7 oder 8, **dadurch gekennzeichnet, dass** die Rückhalteeinrichtung in Form eines den positiven Pol (10, 11) umgebenden Netzschlauchs gebildet ist.

10. Akkumulatorzelle nach Anspruch 7 oder 8 , **dadurch gekennzeichnet, dass** die Rückhalteeinrichtung in Form eines flächigen Netzes und/oder Gitters (16) gebildet ist, welche in Höhenrichtung zwischen dem positiven Pol (10, 11), insbesondere der zugehörigen Polbrücke (7), einerseits und den Elektrodenplatten (5, 4) andererseits angeordnet, insbesondere aufgespannt, ist.

11. Akkumulatorzelle nach Anspruch 10, **dadurch gekennzeichnet, dass** sich das Netz und/oder das Gitter (16) mit seiner jeweiligen flächigen Seite im Wesentlichen über die gesamte Querschnittsfläche des Zellengehäuses (2) erstreckt.

12. Akkumulatorzelle nach Anspruch 7, 10 oder 11, **dadurch gekennzeichnet, dass** die Rückhalteeinrichtung als eigenstabiles Gitter (16) gebildet ist.

13. Bleiakkumulator gebildet aus einer Mehrzahl von Akkumulatorzellen nach einem der Ansprüche 1 bis 12.

## Geänderte Patentansprüche

### Geänderte Patentansprüche gemäss Regel 137(2) EPÜ.

1. Akkumulatorzelle für einen Bleiakkumulator, mit einem Zellengehäuse (2) und einem das Zellengehäuse (2) fluiddicht verschließenden Zellendeckel (3), wobei innerhalb des Zellengehäuses (2) einander abwechselnd positive und negative Elektrodenplatten (5, 4) sowie ein die Elektrodenplatten (5, 4) umgebender Elektrolyt angeordnet sind, wobei die positiven und die negativen Elektrodenplatten (5, 4) jeweils an wenigstens einen gemeinsamen Pol (10, 11; 8, 9) mittels jeweiliger Polbrücke (7, 6) elektrisch angeschlossen sind und wobei der positive Pol (10, 11), der über die zugehörige Polbrücke (7) mit den positiven Elektrodenplatten (5) verbunden ist, aus einer Bleilegierung in Form von Hartblei gebildet ist, **dadurch gekennzeichnet,**
**dass** Hartbleib gebildet ist aus:
| | | |
|---|---|---|
| - | 4 Gew.-% bis 5 Gew.-% | Antimon; |
| - | Rest | Blei, |
**dass** die Polbrücke (7), die die positiven Elektrodenplatten (5) mit dem positiven Pol (10, 11) verbindet, aus Reinblei gebildet ist und
**dass** eine Rückhalteeinrichtung vorgesehen ist, die dazu eingerichtet ist, vom positiven (Pol 10, 11) abgeplatzte Partikel aufzufangen und so einen Kontakt der Partikel mit den Elektrodenplatten (5, 4 zu) verhindern,
wobei die Rückhalteeinrichtung durch ein Netz und/oder ein Gitter (16) gebildet ist,
wobei die Maschenweite des Netzes und/oder des Gitters so ausgebildet ist, dass eine Rückhaltung von kurzschlussverursachenden Partikeln ab einer bestimmten Größe erfolgt, während nicht kurzschlussverursachende Partikel die Rückhalteeinrichtung ungehindert passieren können.

2. Akkumulatorzelle nach Anspruch, **dadurch gekennzeichnet, dass** die Polbrücke (7) und der positive Pol (10, 11) stoffschlüssig miteinander verbunden sind, wobei die stoffschlüssige Verbindung durch eine intermetallische Phase gebildet ist.

3. Akkumulatorzelle nach Anspruch 1 oder 2, **dadurch gekennzeichnet, dass** die positiven und die negativen Elektrodenplatten (5, 4) jeweils eine Höhe von 200 mm bis 500 mm, insbesondere 220 mm bis 420 mm, vorzugsweise 229 mm bis 400 mm, weiter bevorzugt 229 mm oder 400 mm, aufweisen.

4. Akkumulatorzelle nach einem der vorhergehenden Ansprüche, **dadurch gekennzeichnet, dass** die positiven und die negativen Elektrodenplatten (5, 4) jeweils eine Breite von 120 mm bis 300 mm, insbesondere 130 mm bis 270 mm, vorzugsweise 139 mm bis 268 mm, weiter bevorzugt 136 mm oder 268 mm, aufweisen.

5. Akkumulatorzelle nach Anspruch 1, **dadurch gekennzeichnet, dass** die Rückhalteeinrichtung in Form eines den positiven Pol (10, 11) umgebenden Netzschlauchs gebildet ist.

6. Akkumulatorzelle nach Anspruch 1, **dadurch gekennzeichnet, dass** die Rückhalteeinrichtung in Form eines flächigen Netzes und/oder Gitters (16) gebildet ist, welche in Höhenrichtung zwischen dem positiven Pol (10, 11), insbesondere der zugehörigen Polbrücke (7), einerseits und den Elektrodenplatten (5, 4) andererseits angeordnet, insbesondere aufgespannt, ist.

7. Akkumulatorzelle nach Anspruch 6, **dadurch gekennzeichnet, dass** sich das Netz und/oder das Gitter (16) mit seiner jeweiligen flächigen Seite im Wesentlichen über die gesamte Querschnittsfläche des Zellengehäuses (2) erstreckt.

8. Akkumulatorzelle nach Anspruch 1, 6 oder 7, **dadurch gekennzeichnet, dass** die Rückhalteeinrichtung als eigenstabiles Gitter (16) gebildet ist.

9. Bleiakkumulator gebildet aus einer Mehrzahl von Akkumulatorzellen nach einem der Ansprüche 1 bis 8.
